# EUROPÄISCHE PATENTSCHRIFT

(11) **EP 0 933 403 B1**
(45) Veröffentlichungstag und Bekanntmachung des Hinweises auf die Patenterteilung: **05.11.2003**
(21) Anmeldenummer: 99100755.0
(22) Anmeldetag: 16.01.1999
(51) Int. Cl.: C09C 1/00, C09D 17/00, C09D 5/36, C09D 11/02, A61K 7/02, C23C 16/40

(54) **Interferenzpigmente mit blauer Körperfarbe**
Blue interference pigments
Pigments d'interférence bleus

(30) Priorität: 30.01.1998 DE 19803550
(43) Veröffentlichungstag der Anmeldung: 04.08.1999
(73) Patentinhaber: MERCK PATENT GmbH, 64271 Darmstadt (DE)
(72) Erfinder: Vogt, Reiner, Dr., 64289 Darmstadt (DE); Brückner, Hans-Dieter, Dr., 64289 Darmstadt (DE)

(56) Entgegenhaltungen:
- EP-A- 0 256 417
- EP-A- 0 342 533
- DE-A- 19 618 569
- PATENT ABSTRACTS OF JAPAN vol. 0 (C-704), 20. März 1990 (1990-03-20) & JP 02 016168 A (KANEBO), 19. Januar 1990 (1990-01-19)

## Beschreibung

Die Erfindung betrifft mehrschichtige Interferenzpigmente mit blauer Körperfarbe.

Farbige Interferenzpigmente sind bereits bekannt. Sie enthalten entweder Zusätze an Farbmitteln oder färbenden Metalloxiden, wobei die letzteren auch die Interferenzfarben erzeugende Schicht bilden können. Das hierdurch erreichte Farbenspiel ist naturgemäß begrenzt. Insbesondere Pigmente mit blauen oder blaustichigen Farbtönen sind bisher nicht in einer zufriedenstellenden Nuancierung erhältlich. Die Auswahl an gewünschten Farbtönen wird auch noch zusätzlich eingeschränkt, weil Farbmittel die chemische und thermische Stabilität der Interferenzpigmente stark vermindern können.

US 3 951 679 beschreibt farbige Pigmente auf Basis von mit Metalloxidschichten belegtem Glimmer, der zusätzlich mit einem farbigen Überzug aus Berliner Blau versehen ist. Die Schicht aus Berliner Blau wird durch Umsetzung einer auf dem Substrat abgeschiedenen Eisenverbindung mit einem wasserlöslichen Hexacyanoferrat gebildet. Dieses Pigment hat den Nachteil, daß sich das Berliner Blau bei einer Temperatur von 200 bis 300 °C zersetzt.

US 4 968 351 beschreibt ein Perlglanzpigment, das mittels eines adsorbierten Farbstoffs gefärbt ist, wobei zur Verstärkung der Farbstoffadsorbtion auf der Farbstoffschicht ein Farblack aufgebracht ist. Nachteilig bei diesem Pigment ist, daß bei Kontakt mit organischen Lösemitteln der organische Farbstoff vom Interferenzpigment getrennt wird. Außerdem verschlechtert der organische Farbstoff die Witterungsstabilität des Pigmentes.

US 5 169 442 beschreibt ein blaugrünes Pigment, bestehend aus einem mit Metalloxid beschichteten Glimmer als Substrat und einer Deckschicht, die aus einem Mischoxid aus Magnesiumoxid, Calciumoxid, Kobaltoxid und Titandioxid gebildet wird. Die Körperfarbe dieses Pigmentes ist aber kein reines Blau.

Aus der DE 196 18 569 sind mehrschichtige Interferenzpigmente, bestehend aus einem transparenten Trägermaterial, das mit alternierenden Schichten von Metalloxiden mit niedriger und hoher Brechzahl beschichtet ist, bekannt.

EP 0 256 417 beschreibt plättchenförmige Farbpigmente umfassend ein plättchenförmiges Trägermaterial sowie Zinkoxid und ein anorganisches Farbpigment auf der Oberfläche desselben.

EP 0 342 533 offenbart wetterbeständige Periglanzpigmente umfassend Glimmerplättchen beschichtet mit einem Metalloxid, einem Zirkoniumoxidhydrat sowie mindestens einem Metalloxidhydrat bzw. Metalloxid der Elemente Cobalt, Mangan und Cer.

Ein plättchenförmiges anorganisches Pulver beschichtet mit Titandioxid, Aluminiumoxid und einer gefärbten anorganischen Verbindung wie Eisenoxid ist aus JP 02-016 168 bekannt.

Aufgabe der Erfindung ist es, Interferenzpigmente mit blauer Körperfarbe bereitzustellen, die die Lichtstabilität, chemische Stabilität und Witterungsstabilität handelsüblicher Interferenzpigmente besitzen.

Diese Aufgabe wird gemäß der Erfindung gelöst durch mehrschichtige Interferenzpigmente mit blauer Körperfarbe, bestehend aus einem plättchenförmigen Trägermaterial und einer Beschichtung, die aus
(i) einer ersten Schicht aus Kobaltaluminat oder kobalthaltigem Glas
(ii) einer zweiten Schicht eines farblosen, transparenten Metalloxides mit niedriger Brechzahl und
(iii) einer dritten, äußeren Schicht eines farblosen, transparenten Metalloxides mit hoher Brechzahl gebildet wird.

Weiterhin wird diese Aufgabe gemäß der Erfindung gelöst durch ein Verfahren zur Herstellung der erfindungsgemäßen Pigmente, indem
- das plättchenförmige Trägermaterial in Wasser suspendiert und die Suspension auf 50 bis 100 °C erhitzt wird und bei einem pH-Wert von 3 bis 10 mit Cobalt- und Aluminiumoxidhydrat durch Zugabe und Hydrolyse der entsprechenden wasserlöslichen Metallverbindungen beschichtet wird, wobei durch gleichzeitige Zugabe einer Base der pH-Wert konstant gehalten wird,
- anschließend der pH-Wert mit einer Base auf 4 bis 10 eingestellt wird und eine wasserlösliche Metallverbindung zugesetzt wird, so daß ein Metalloxidhydrat mit niedriger Brechzahl auf die suspendierten Partikel aufgefällt wird, wobei durch gleichzeitige Zugabe von Säure oder Base der pH-Wert konstant gehalten wird und
- danach eine wasserlösliche Metallverbindung bei einem für die Hydrolyse geeigneten pH-Wert zugesetzt wird, so daß ein Metalloxidhydrat mit hoher Brechzahl auf die suspendierten Partikel aufgefällt wird, wobei durch gleichzeitige Zugabe von Säure oder Base der für die Fällung des jeweiligen Metalloxidhydrates notwendige pH-Wert eingestellt und konstant gehalten wird und
- anschließend das Produkt gewaschen, bei 60 bis 180 °C getrocknet und bei 500 bis 1100 °C geglüht wird.

Gegenstand der Erfindung ist außerdem die Verwendung der erfindungsgemäßen Pigmente zur Pigmentierung von Lacken, Druckfarben, Kunststoffen, Kosmetika und Glasuren für Keramiken und Gläser, sowie für die Lasermarkierung von Kunststoffen.

Hierfür können sie als Mischungen mit handelsüblichen Pigmenten, beispielsweise anorganischen und organischen Absorptionspigmenten, Metalleffektpigmenten und LCP-Pigmenten, eingesetzt werden.

Geeignete Trägermaterialien für die erfindungsgemäßen Pigmente sind plättchenförmige natürliche oder künstliche Materialien, die keine Eigenfarbe besitzen. Bevorzugte Trägermaterialien sind Schichtsilikate, Metalloxidplättchen sowie Glas- und Keramikplättchen. Besonders bevorzugt sind Glimmer, Talkum, Kaolin, synthetischer Glimmer, Aluminiumoxid- und Siliciumdioxidplättchen.

Die Siliciumdioxidplättchen werden gemäß der Internationalen Anmeldung WO 93/08 237 auf einem endlosen Band durch Verfestigung und Hydrolyse einer Wasserglaslösung hergestellt.

Die Größe der Trägermaterialien ist nicht kritisch und kann auf den jeweiligen Anwendungszweck abgestimmt werden. In der Regel haben die plättchenförmigen Trägermaterialien eine Dicke zwischen 0,05 und 5 µm, insbesondere zwischen 0,2 und 2,0 µm. Die Ausdehnung in den beiden anderen Dimensionen beträgt üblicherweise zwischen 2 und 100 µm und insbesondere zwischen 5 und 50 µm.

Die Dicke der einzelnen Schichten des Pigmentes ist wesentlich für die optischen Eigenschaften des Pigments. Für ein Pigment mit intensiven Interferenzfarben muß die Dicke der einzelnen Schichten aufeinander eingestellt werden. Darüber hinaus kann durch geeignete Wahl der Schichtdicken eine besonders starke Variation der Farbe in Abhängigkeit vom Betrachtungswinkel erreicht werden. Das wird beispielsweise durch die Auffällung einer dicken SiO₂-Schicht (Schichtdicke > 100 nm) erreicht, wodurch Pigmente mit einer stark ausgeprägten Winkelabhängigkeit der Interferenzfarben erhalten werden.

Die Dicken der einzelnen Schichten der erfindungsgemäßen Pigmente liegen in folgenden Bereichen:

| | |
|---|---|
| Metalloxid mit hoher Brechzahl | 70-110 nm |
| Metalloxid mit niedriger Brechzahl | 60-110 nm |
| Farbgebende Schicht | 50- 90 nm |

Daraus ergeben sich beispielsweise folgende Anteile für die einzelnen Bestandteile eines erfindungsgemäßen Pigments:
25-40 Gew.-% Trägermaterial
0,1-3 Gew.-% SnO₂
20-40 Gew.-% TiO₂ (Metalloxid mit hoher Brechzahl)
10-20 Gew.-% SiO₂ (Metalloxid mit niedriger Brechzahl)
10-35 Gew.-% CoAl₂O₄

Das Zinndioxid dient lediglich zur Induzierung der Rutil-Modifikation bei der Verwendung von Titandioxid für die 1. Schicht. Es wird direkt auf das Trägermaterial aufgefällt. Dieses Verfahren ist in US 4 867 794 näher beschrieben.

Die Metalloxidschichten werden vorzugsweise naßchemisch aufgebracht, wobei die zur Herstellung von Perlglanzpigmenten entwickelten naßchemischen Beschichtungsverfahren angewendet werden können; derartige Verfahren sind z.B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren Patentdokumenten und sonstigen Publikationen.

Zur Beschichtung werden die Substratpartikel in Wasser suspendiert und mit einem oder mehreren hydrolysierbaren Metallsalzen bei einem für die Hydrolyse geeigneten pH-Wert versetzt, der so gewählt wird, daß die Metalloxide bzw. Metalloxidhydrate direkt auf den Partikeln niedergeschlagen werden, ohne daß es zu Nebenfällungen kommt. Der pH-Wert wird üblicherweise durch gleichzeitiges Zudosieren einer Base konstant gehalten.

Als Metalloxid mit hoher Brechzahl werden Titandioxid, Zirkondioxid oder Zinnoxid verwendet, wobei Titandioxid bevorzugt wird. Als Metalloxid mit niedriger Brechzahl werden Siliciumdioxid oder Aluminiumoxid eingesetzt, wobei Siliciumdioxid bevorzugt wird.

Für das Aufbringen der Titandioxidschichten wird das im US 3 553 001 beschriebene Verfahren bevorzugt. Zu einer auf etwa 50-100 °C, insbesondere 70-80 °C erhitzten Suspension des zu beschichtenden Materials wird langsam eine wäßrige Titansalzlösung zugegeben, und es wird durch gleichzeitiges Zudosieren einer Base, wie z.B. wäßrige Ammoniaklösung oder wäßrige Alkalilauge, ein weitgehend konstanter pH-Wert von etwa 0,5-5, insbesondere etwa 1,5-2,5 eingehalten. Sobald die gewünschte Schichtdicke der TiO₂-Fällung erreicht ist, wird die Zugabe der Titansalzlösung und der Base gestoppt.

Dieses, auch als Titrationsverfahren bezeichnete Verfahren zeichnet sich dadurch aus, daß ein Überschuß an Titansalz vermieden wird. Das wird dadurch erreicht, daß man pro Zeiteinheit nur eine solche Menge der Hydrolyse zuführt, wie sie für eine gleichmäßige Beschichtung mit dem hydratisierten TiO₂ erforderlich ist und die pro Zeiteinheit von der verfügbaren Oberfläche der zu beschichtenden Teilchen aufgenommen werden kann. Es entstehen deshalb keine hydratisierten Titandioxidteilchen, die nicht auf der zu beschichtenden Oberfläche niedergeschlagen sind.

Für das Aufbringen der Siliziumdioxidschichten ist folgendes Verfahren anzuwenden: Zu einer auf etwa 50-100 °C, insbesondere 70-80 °C erhitzten Suspension des zu beschichtenden Materials wird eine Natronwasserglaslösung zudosiert. Durch gleichzeitige Zugabe von 10%iger Salzsäure wird der pH-Wert bei 4 bis 10, vorzugsweise bei 6,5 bis 8,5 konstant gehalten. Nach Zugabe der Wasserglaslösung wird noch 30 min nachgerührt.

Die Fällung von Aluminiumoxidhydrat auf plättchenförmige Materialien ist aus US 4 084 983 bekannt. Das Material wird in Wasser suspendiert, und diese Suspension wird zweckmäßig auf höhere Temperaturen, z.B. zwischen 40 und 95 °C erhitzt. Dann läßt man eine wäßrige saure Lösung eines wasserlöslichen Aluminiumsalzes, z.B. Aluminiumchlorid, Aluminiumnitrat, Kalium-Aluminiumsulfat oder Aluminiumsulfat, oder eine wäßrigalkalische Lösung eines Aluminats, z.B. Natriumaluminat oder Kaliumaluminat, zu der Suspension fließen. Die Konzentration an Al-lonen in der zulaufenden Salzlösung liegt zwischen 0,1 und 5 Mol/l. Gleichzeitig gibt man Alkali oder Säure zu, um einen pH-Wert zwischen 3 und 10 einzustellen, vorzugsweise zwischen 4 und 9. Als Alkali kommen vor allem Alkali- und Ammoniumhydroxide, vorzugsweise wäßrige NaOH oder gasförmiges NH₃, in Betracht. Bei einem Säurezusatz ist HCI, H₂SO₄ oder HNO₃ bevorzugt.

Die Zugabe des Alkalis oder der Säure wird so geregelt, daß der pH-Wert der Suspension während der Fällung möglichst konstant bleibt.

Die Fällung von Cobaltoxidhydrat ist in EP 0 342 533 näher beschrieben. Sie erfolgt bei einem pH-Wert von 4 bis 9. Da die Fällungsbedingungen von Cobaltoxidhydrat und Aluminiumoxidhydrat praktisch gleich sind, ist eine Mischfällung beider Oxidhydrate möglich.

Wird als farbgebende Schicht ein kobalthaltiges Glas eingesetzt, wird die folgt verfahren:

Cobaltoxidhydrat und Siliciumoxidhydrat werden gemeinsam als Mischfällung unter den oben angegebenen Bedingungen auf das Trägermaterial als erste oder dritte Schicht aufgefällt. Die Glasstruktur bildet sich dann beim Glühen des Produktes aus.

Wolframbronzen der allgemeinen Formel M_{X}WO₃ können ebenfalls als farbgebende Schicht verwendet werden. Die auf das Trägermaterial abgeschiedenen Alkalimetallwolframate werden anschließend mit Wasserstoff oder einem anderen geeigneten Reduktionsmittel so weit reduziert, bis sich eine Verbindung der Formel M_{0,3}WO₃ gebildet hat Diese Wolframate sind intensiv blauviolett gefärbt.

Es ist weiterhin möglich, das fertige Pigment einer Nachbeschichtung oder Nachbehandlung zu unterziehen, die die Licht-, Wetter- und chemische Stabilität weiter erhöht, oder die Handhabung des Pigments, insbesondere die Einarbeitung in unterschiedliche Medien, erleichtert. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage.

## Patentansprüche

1. Mehrschichtige Interferenzpigmente mit blauer Körperfarbe, bestehend aus einem plättchenförmigen Trägermaterial und einer Beschichtung, die aus
(i) einer ersten Schicht aus Kobaltaluminat oder kobalthaltigem Glas,
(ii) einer zweiten Schicht eines farblosen, transparenten Metalloxides mit niedriger Brechzahl und
(iii) einer dritten, äußeren Schicht eines farblosen, transparenten Metalloxides mit hoher Brechzahl gebildet wird.

2. Interferenzpigmente nach Anspruch 1, **dadurch gekennzeichnet, daß** es sich bei dem plättchenförmigen Trägermaterial um natürlichen oder synthetischen Glimmer, andere Schichtsilikate, Glasplättchen, Aluminiumoxidplättchen oder Siliciumdioxidplättchen handelt.

3. Interferenzpigmente nach einem der Ansprüche 1 oder 2, **dadurch gekennzeichnet, daß** das farblose, transparente Metalloxid mit hoher Brechzahl Titandioxid, Zirkonoxid oder Zinnoxid ist.

4. Interferenzpigmente nach einem der Ansprüche 1 bis 3, **dadurch gekennzeichnet, daß** das farblose, transparente Metalloxid mit niedriger Brechzahl Siliciumdioxid oder Aluminiumoxid ist.

5. Verfahren zur Herstellung der Pigmente nach Anspruch 1, **dadurch gekennzeichnet, daß**
- das plättchenförmige Trägermaterial in Wasser suspendiert und die Suspension auf 50 bis 100 °C erhitzt wird und bei einem pH-Wert von 3 bis 10 Cobalt- und Aluminiumoxidhydrat oder Cobalt- und Siliciumoxidhydrat durch Zugabe und Hydrolyse der entsprechenden wasserlöslichen Metallverbindungen beschichtet wird, wobei durch gleichzeitige Zugabe einer Base der pH-Wert konstant gehalten wird,
- anschließend der pH-Wert mit einer Base auf 4 bis 10 eingestellt wird und eine wasserlösliche Metallverbindung zugesetzt wird, so daß ein Metalloxidhydrat mit niedriger Brechzahl auf die suspendierten Partikel aufgefällt wird, wobei durch gleichzeitige Zugabe von Säure oder Base der pH-Wert konstant gehalten wird und
- danach eine wasserlösliche Metallverbindung bei einem für die Hydrolyse geeigneten pH-Wert zugesetzt wird, so daß ein Metalloxidhydrat mit hoher Brechzahl auf die suspendierten Partikel aufgefällt wird, wobei durch gleichzeitige Zugabe von Säure oder Base der für die Fällung des jeweiligen Metalloxidhydrates notwendige pH-Wert eingestellt und konstant gehalten wird und
- anschließend das Produkt gewaschen, bei 60 bis 180 °C getrocknet und bei 500 bis 1100 °C geglüht wird.

6. Verfahren nach Anspruch 5, **dadurch gekennzeichnet, daß** es sich bei dem plättchenförmigen Trägermaterial um natürlichen oder synthetischen Glimmer, andere Schichtsilikate, Glasplättchen, Aluminiumoxidplättchen oder Siliciumdioxidplättchen handelt.

7. Verfahren nach einem der Ansprüche 5 oder 6, **dadurch gekennzeichnet, daß** das farblose, transparente Metalloxid mit hoher Brechzahl Titandioxid, Zirkondioxid oder Zinnoxid ist.

8. Verfahren nach einem der Ansprüche 5 bis 7, **dadurch gekennzeichnet, daß** das farblose, transparente Metalloxid mit niedriger Brechzahl Siliciumdioxid oder Aluminiumoxid ist.

9. Verwendung der Pigmente nach Anspruch 1 zur Pigmentierung von Lacken, Druckfarben, Kunststoffen, Kosmetika und Glasuren für Keramiken und Gläser.

10. Verwendung nach Anspruch 9, **dadurch gekennzeichnet, daß** die Pigmente als Mischungen mit handelsüblichen Pigmenten eingesetzt werden.

11. Verwendung der Pigmente nach Anspruch 1 zur Lasermarkierung von Kunststoffen.

12. Lacke, Druckfarben, Kunststoffe, Kosmetika, Keramiken und Gläser, welche mit einem Pigment nach Anspruch 1 pigmentiert sind.

13. Lasermarkierbare Kunststoffe enthaltend Pigmente nach Anspruch 1.

## Claims

1. Multilayer interference pigments having a blue mass tone, consisting of a platelet-shaped carrier material and a coating which is formed from
(i) a first layer of cobalt aluminate or cobalt-containing glass,
(ii) a second layer of a colourless, transparent metal oxide of low refractive index and
(iii) a third, outer layer of a colourless, transparent metal oxide of high refractive index.

2. Interference pigments according to Claim 1, **characterized in that** the platelet-shaped carrier material comprises natural or synthetic mica, other phyllosilicates, glass flakes, aluminium oxide platelets or silicon dioxide platelets.

3. Interference pigments according to either of Claims 1 or 2, **characterized in that** the colourless, transparent metal oxide of high refractive index is titanium dioxide, zirconium oxide or tin oxide.

4. Interference pigments according to one of Claims 1 to 3, **characterized in that** the colourless, transparent metal oxide of low refractive index is silicon dioxide or aluminium oxide.

5. Process for preparing the pigments according to Claim 1, **characterized in that**
- the platelet-shaped carrier material is suspended in water and the suspension is heated to 50 to 100°C and is coated at a pH of from 3 to 10 with cobalt and aluminium oxide hydrate or cobalt and silicon oxide hydrate by addition and hydrolysis of the corresponding water-soluble metal compounds, the pH being kept constant by simultaneous addition of base,
- subsequently the pH is adjusted with a base to 4 to 10 and a water-soluble metal compound is added, so that a metal-oxide hydrate of low refractive index is precipitated onto the suspended particles, the pH being kept constant by simultaneous addition of acid or base, and
- then a water-soluble metal compound is added at a pH suitable for hydrolysis, so that a metal oxide hydrate of high refractive index is precipitated onto the suspended particles, the pH required for the precipitate of the respective metal oxide hydrate being established and kept constant by simultaneous addition of acid or base, and
- subsequently the product is washed, dried at from 60 to 180°C and calcined at from 500 to 1100°C.

6. Process according to Claim 5, **characterized in that** the platelet-shaped carrier material comprises natural or synthetic mica, other phyllosilicates, glass flakes, aluminium oxide platelets or silicon dioxide platelets.

7. Process according to either of Claims 5 or 6, **characterized in that** the colourless, transparent metal oxide of high refractive index is titanium dioxide, zirconium dioxide or tin oxide.

8. Process according to one of Claims 5 to 7, **characterized in that** the colourless, transparent metal oxide of low refractive index is silicon dioxide or aluminium oxide.

9. Use of the pigments according to Claim 1 for pigmenting paints, printing inks, plastics, cosmetics and glazes for ceramics and glasses.

10. Use according to Claim 9, **characterized in that** the pigments are employed as mixtures with customary commercial pigments.

11. Use of the pigments according to Claim 1 for the laser marking of plastics.

12. Paints, printing inks, plastics, cosmetics, ceramics and glasses which have been pigmented with pigment according to Claim 1.

13. Laser-markable plastics comprising pigments according to Claim 1.

## Revendications

1. Pigments d'interférence multicouche avec une couleur de corps bleue, consistant en un substrat de forme lamellaire et en un revêtement, qui se compose :
(i) d'une première couche d'aluminate de cobalt ou de verre au cobalt,
(ii) d'une deuxième couche d'un oxyde métallique transparent et incolore ayant un indice de réfraction faible et
(iii) une troisième couche extérieure d'un oxyde métallique transparent et incolore ayant un indice de réfraction élevé.

2. Pigments d'interférence selon la revendication 1, **caractérisés en ce qu'**il s'agit, pour le substrat de forme lamellaire, de mica naturel ou synthétique, d'autres phyllosilicates, de lamelles de verre, de lamelles d'oxyde d'aluminium ou de lamelles de dioxyde de silicium.

3. Pigments d'interférence selon l'une des revendications 1 ou 2, **caractérisés en ce que** l'oxyde métallique transparent et incolore avec un indice de réfraction élevé est le dioxyde de titane, l'oxyde de zirconium ou l'oxyde d'étain.

4. Pigments d'interférence selon l'une des revendications 1 à 3, **caractérisés en ce que** l'oxyde métallique transparent et incolore ayant un indice de réfraction faible est du dioxyde de silicium ou de l'oxyde d'aluminium.

5. Procédé de préparation des pigments selon la revendication 1, **caractérisé en ce que** :
- le substrat de forme lamellaire est en suspension dans de l'eau et la suspension est chauffée à 50-100°C et est revêtu d'un hydrate de cobalt et d'oxyde d'aluminium ou d'un hydrate de cobalt et d'oxyde de silicium ayant une valeur de pH de 3 à 10 par l'ajout et l'hydrolyse des composés métalliques hydrosolubles correspondants, moyennant quoi la valeur de pH est maintenue constante par l'ajout simultané d'une base,
- puis la valeur de pH est réglée de 4 à 10 avec une base et un composé métallique hydrosoluble est ajouté, de sorte qu'un hydrate d'oxyde métallique ayant un indice de réfraction faible précipite sur les particules en suspension, moyennant quoi la valeur de pH est maintenue constante par l'ajout simultané d'un acide ou d'une base et
- ensuite on ajoute un composé métallique hydrosoluble ayant une valeur de pH appropriée pour l'hydrolyse, de sorte qu'un hydrate d'oxyde métallique ayant un indice de réfraction élevé précipite sur les particules en suspension, moyennant quoi, par l'ajout simultané d'un acide ou d'une base, la valeur de pH nécessaire à la précipitation de l'hydrate d'oxyde métallique respectif est réglée et maintenue constante et
- puis le produit est lavé, séché à 60-180°C et calciné à 500-1100°C.

6. Procédé selon la revendication 5, **caractérisé en ce qu'**il s'agit, pour le substrat de forme lamellaire, de mica naturel ou synthétique, d'autres phyllosilicates, de lamelles de verre, de lamelles d'oxyde d'aluminium ou de lamelles de dioxyde de silicium.

7. Procédé selon l'une des revendications 5 ou 6, **caractérisé en ce que** l'oxyde métallique transparent et incolore ayant un indice de réfraction élevés est le dioxyde de titane, le dioxyde de zirconium ou l'oxyde d'étain.

8. Procédé selon l'une des revendications 5 à 7, **caractérisé en ce que** l'oxyde métallique transparent et incolore ayant un indice de réfraction faible est le dioxyde de silicium ou l'oxyde d'aluminium.

9. Utilisation des pigments selon la revendication 1, pour la pigmentation de vernis, d'encres d'imprimerie, de matières plastiques, de produits cosmétiques et de glaçures pour céramiques et verres.

10. Utilisation selon la revendication 9, **caractérisée en ce que** les pigments sont constitués comme des mélanges avec des pigments du commerce.

11. Utilisation selon la revendication 1, pour le marquage au laser de matières plastiques.

12. Vernis, encres d'imprimerie, matières plastiques, produits cosmétiques, céramiques et verres qui sont pigmentés avec un pigment selon la revendication 1.

13. Matières plastiques marquables au laser contenant les pigments selon la revendication 1.
